# EUROPÄISCHE PATENTANMELDUNG

(11) **EP 1 258 503 A1**
(43) Veröffentlichungstag der Anmeldung: **20.11.2002**
(21) Anmeldenummer: 01810478.6
(22) Anmeldetag: 15.05.2001
(51) Int. Cl.: C08G 77/388, C08G 77/46, D06M 15/643

(54) **Modifizierte Polyorganosiloxane, wässrige Emulsionen davon, ihre Herstellung und Verwendung**

(71) Anmelder: Clariant International Ltd., 4132 Muttenz 1 (CH)
(72) Erfinder: Die Erfindernennung liegt noch nicht vor

(57) **Zusammenfassung**

Substituierte Aminopolyorganosiloxane (S_{H}) enthaltend substituierte Aminogruppen, die über Alkylenbrücken oder Mono- oder Oligo-(alkylenamino)-alkylenbrücken an Siliciumatome des Polysiloxangrundgerüstes gebunden sind, worin die in den Aminopolyorganosiloxanen vorkommenden Aminogruppen mindestens teilweise mit einem Rest der Formel

T―CH₂―CHOH―CH₂― (ε),

worin T den Rest eines tensiden Monoalkoholpolyglykoläthers mit εEmulgatorcharakter bedeutet,
im durchschnittlichen Verhältnis von mindestens 1,5 Resten der Formel (ε) pro Si-gebundene Aminoalkyl- oder Amino-mono- oder -oligo-(alkylenamino)-alkyl-Gruppe substituiert sind, und
vorhandene Aminogruppen gegebenenfalls mindestens teilweise zu Amidgruppen acyliert sind oder alkyliert und/oder benzyliert und/oder protoniert sind,
wäßrige Präparate (W_{SH}) davon, ihre Herstellung und Verwendung, besonders zur weichmachenden Ausrüstung von Fasermaterial.

## Beschreibung

Zur weichmachenden Ausrüstung von Textilien sind Polysiloxane begehrte Weichmacher wegen ihrer typischen Eigenschaften, vor allem der Weichgriffqualität und -beständigkeit. Zur Applikation werden üblicherweise wäßrige Flotten verwendet, und für die Zugabe in die Flotten werden die Polysiloxane im allgemeinen in Form von wäßrigen Emulsionen formuliert, zweckmäßig unter Zuhilfenahme von geeigneten Emulgatoren. Die Applikation kann vornehmlich nach Imprägnier- oder Ausziehverfahren erfolgen. Wenn die Applikation nach Ausziehverfahren nach den modernen schnell-laufenden Verfahren in Düsenfärbeapparaten durchgeführt wird, kann sich die Applikation der Polysiloxane aus den wäßrigen Applikationsflotten problematisch gestalten, denn für die Anwendung in Düsenfärbeapparaten werden die Applikationsflotten, bedingt durch die hohe Geschwindigkeit der Ware und/oder Flotte bzw. durch die hohe gegenseitige Geschwindigkeit der Ware und der Flotte, einer hohen dynamischen Beanspruchung unterworfen, durch welche hohe und variable Scherkräfte auf die in der Flotte befindlichen Produkte einwirken. Durch diese hohen und auch variablen Scherkräfte können die dispergierten (bzw. emulgierten) Bestandteile der wäßrigen Flotte destabilisiert werden und sich zum Beispiel als Agglomerate abtrennen, was zur Folge hat, daß die abgetrennten Anteile Ware und Apparate verschmieren, welche dann mühsam gereinigt werden müssen. Wenn die Textilware mit abgetrenntem Polysiloxan verschmiert wird - was die gefürchteten "Siloxanflecke" auf der Ware verursacht -, ist die Entfernung der Siloxanflecke von der Ware besonders schwierig wenn nicht u.U. unmöglich. Bei wäßrigen Polysiloxanemulsionen können zusätzlich in der Flotte oder auf dem Substrat vorhandene Produkte (z.B. Tenside, Farbstoffe, optische Aufheller oder/und polymere Behandlungsmittel) eine von Fall zu Fall unterschiedliche störende Einwirkung auf die Polysiloxanemulsion ausüben, was ihre Destabilisierung zusätzlich begünstigt. Bei der Behandlung von Kreuzspulen oder in sonstigen Verfahren, in welchen die Flotte durch Düsen oder durch das Substrat forciert wird, oder auch in Flottenzirkulationspumpen, können die Flotten auch hohen dynamischen Beanspruchungen unterworfen werden und dadurch destabilisiert werden.

Es wurde nun gefunden, daß die unten definierten, modifizierten Aminopolyorganosiloxane Weichmacher mit einer breiten Streuung an Substantivität und Hydrophilie darstellen, deren wäßrige Emulsionen und Mikroemulsionen überraschend scherkräftebeständig sind, und die für die Applikation unter starker dynamischer Beanspruchung der Flotte, z.B. in Düsenfärbeapparaten, hervorragend geeignet sind.

Die Erfindung betrifft die definierten Polysiloxane (S_{H}) und wäßrige Präparate davon, ihre Herstellung und ihre Verwendung.

Ein erster Gegenstand der Erfindung sind substituierte Aminopolyorganosiloxane (S_{H}) enthaltend substituierte Aminogruppen, die über Alkylenbrücken oder Mono- oder Oligo-(alkylenamino)-alkylenbrücken an Siliciumatome des Polysiloxangrundgerüstes gebunden sind, worin die in den Aminopolyorganosiloxanen vorkommenden Aminogruppen mindestens teilweise mit einem Rest der Formel

T―CH₂―CHOH―CH₂- (ε),

worin T den Rest eines tensiden Monoalkoholpolyglykoläthers mit Emulgatorcharakter bedeutet,

im durchschnittlichen Verhältnis von mindestens 1,5 Resten der Formel (ε) pro Si-gebundene Aminoalkylgruppe oder Amino-mono- oder -oligo-(alkylenamino)-alkyl-Gruppe substituiert sind, und vorhandene Aminogruppen gegebenenfalls mindestens teilweise zu Amidgruppen acyliert sind oder alkyliert und/oder benzyliert sind und/oder protoniert sind.

Die erfindungsgemäßen substituierten Aminopolyorganosiloxane (S_{H}) können analog zu an sich bekannten Methoden, durch Einführung der Reste (ε) und gegebenenfalls eines oder mehrerer der weiteren Substituenten, in entsprechende Ausgangsaminopolyorganosiloxane (S), die primäre und/oder sekundäre Aminogruppen enthalten, hergestellt werden.

Das Verfahren zur Herstellung der erfindungsgemäßen substituierten Aminopolyorganosiloxane (S_{H}) ist insbesondere dadurch gekennzeichnet, daß man Aminopolyorganosiloxane (S), welche primäre und/oder sekundäre Aminogruppen, die über Alkylenbrücken oder Mono- oder Oligo--(alkylenamino)-alkylenbrücken an Siliciumatome des Polysiloxangrundgerüstes gebunden sind, enthalten, mit mindestens einem Alkoholpolyglykoläther-monoglycidyläther (H) umsetzt und gegebenenfalls acyliert und/oder alkyliert und/oder benzyliert und/oder protoniert.

Die Alkoholpolyglykoläther-monoglycidyläther (H) sind im allgemeinen Glycidyläther von Alkoholpolyglykoläthern mit tensidem Charakter, insbesondere mit Emulgatorcharakter, und können durch die folgende Formel dargestellt werden 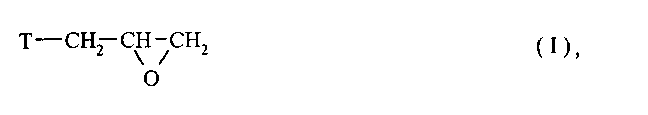 worin T den Rest des entsprechenden tensiden Alkoholpolyglykoläthers T-H bedeutet, insbesondere wie sie durch Glycidylätherbildung eines entsprechenden tensiden Alkoholpolyglykoläthers T-H herstellbar sind.

Die tensiden Alkoholpolyglykoläther T-H können beliebige entsprechende Tenside sein, z.B. worin der Alkoholrest aus einem araliphatischen, alkylaromatischen oder vorzugsweise aliphatischen Alkohol mit mindestens 8 Kohlenstoffatomen, vorzugsweise mit 8 bis 24 Kohlenstoffatomen, stammt und der Polyglykolrest ein Polyalkylenglykolrest ist, worin Alkylen 2 bis 4 Kohlenstoffatome enthält und mindestens ein Teil der Alkylenglykoleinheiten Äthylenglykoleinheiten sind. Sie haben vorteilhaft vorwiegend hydrophilen Charakter und sind vorzugsweise solche, worin die Anzahl Äthylenoxy-Einheiten durchschnittlich mindestens die Hälfte der in T-H vorhandenen Alkylenoxy-Einheiten ausmacht. Vorzugsweise sind die Alkoholpolyglykoläther T-H solche der folgenden durchschnittlichen Formel

R₁(̵O-X)̵_{q}OH (II),

worin
R₁ einen Kohlenwasserstoffrest mit 8 bis 24 Kohlenstoffatomen,
X C₂₋₄-Alkylen
und
q 4 bis 50
bedeuten, wobei mindestens 50 % der q Alkylengruppen in der Bedeutung von X Äthylen bedeuten.

Die Kohlenwasserstoffreste R₁ können beliebige Reste sein, wie sie sonst üblicherweise in nicht-onogenen Tensiden vorkommen. Sie sind vorteilhaft alkylaromatisch oder aliphatisch und enthalten vorteilhaft 9 bis 18, vorzugsweise 11 bis 16 Kohlenstoffatome.

Wenn R₁ alkylaromatisch ist steht R₁O- vorzugsweise für den Rest eines Mono- oder Dialkylphenols, vorzugsweise z.B. für den Rest von Di-t.butyl-phenol, p-Isooctyl-phenol oder p-Nonyl-phenol.

Wenn R₁ aliphatisch ist, ist es vorzugsweise gesättigt; R₁O- steht in diesem Fall vorzugsweise für den Rest eines primären, gesättigten, aliphatischen Alkohols bzw. eines primären Alkanols, welches vorteilhaft 9 bis 18, vorzugsweise 11 bis 16 Kohlenstoffatome enthält. Der entsprechende aliphatische Alkohol R₁OH kann z.B. ein linearer Fettalkohol sein, z.B. Laurylalkohol, Myristylalkohol, Cetylalkohol oder Stearylalkohol, oder auch ein Synthesealkohol (z.B. aus der Oxosynthese oder aus der Ziegler-Synthese), welcher linear oder verzweigt sein kann, z.B. Nonanol, Isononanol, Decanol, Isodecanol, Undecanol, Tridecanol, Isotridecanol oder Isohexadecanol.

Die Anzahl q der an diesen Alkohol zur Bildung des Alkoholpolyglykoläthers, insbesondere der Formel (II), angelagerten Alkylenoxyeinheiten ist vorteilhaft im Bereich von 4 bis 30, vorzugsweise 4 bis 20. Vorteilhaft sind mindestens 80 % der q Alkylenoxyeinheiten Äthylenoxyeinheiten, vorzugsweise sind 100 % der q Alkylenoxyeinheiten Äthylenoxyeinheiten. Die Anzahl Äthylenoxyeinheiten in T-H ist vorteilhaft 4 bis 30, vorzugsweise 4 bis 18, besonders bevorzugt 5 bis 12.

Die Tenside bzw. Emulgatoren T-H, insbesondere der Formel (II), sind vorteilhaft solche, deren HLB größer als 7 ist, und vorteilhaft im Bereich von 7 bis 17, vorzugsweise 8 bis 16,5, besonders bevorzugt 9 bis 16, liegt.

Zur Herstellung der Glycidyläther (H), insbesondere derjenigen der Formel (I), können die Alkoholpolyglykoläther T-H, insbesondere diejenigen der Formel (II), mit Epichlorhydrin in zwei Stufen umgesetzt werden, wobei in der ersten die Hydroxygruppe von T-H mit der Epoxygruppe des Epichlorhydrins umgesetzt wird, sodaß letzteres unter Öffnung des Epoxyringes an die Hydroxygruppe von T-H angelagert wird und das entsprechende Chlorhydrin entsteht, und in der zweiten das erhaltene Chlorhydrin dehydrochloriert wird und so der Epoxyring des Glycidylrestes geschlossen wird. Diese Umsetzung kann auf analoge Weise zu bekannten Glycidylätherbildungen durchgeführt werden, vorzugsweise in Abwesenheit von Lösungsmitteln. Die erste Stufe wird vorteilhaft bei Temperaturen unterhalb 130°C, vorzugsweise im Bereich von 50 bis 120°C, besonders bevorzugt 60 bis 110°C durchgeführt, vorteilhaft in Gegenwart eines geeigneten Ringöffnunungskatalysators, z.B. Zinntetrachlorid oder Bortrifluorid-ätherat. Die zweite Stufe erfolgt zweckmäßig unter inerter Atmosphäre (vorzugsweise unter vermindertem Druck, um das Reaktionswasser zu entfernen), und bei milder Temperatur, z.B. im Bereich von 20 bis 100°C, vorzugsweise 25 bis 90°C. Die Reaktionskomponenten T-H und Epichlorhydrin werden zweckmäßig in stöchiometrischem oder nahezu stöchiometrischem Mengenverhältnis eingesetzt. Pro Mol Alkoholpolyalkylenglykoläther T-H kann z.B. 1 Mol Epichlorhydrin ± 10 %, vorzugsweise 1 Mol Epichlorhydrin ± 5 %, eingesetzt werden.

Durch diese Umsetzung kann der Monoglycidyläther (H) in hoher Ausbeute hergestellt werden, was durch die Titrierung der Epoxygruppen, bzw. Ermittlung des Epoxyäquivalenten, festgestellt werden kann. Ein Epoxyäquivalent ist diejenige Menge Produkt, die in der Titration mit Perchlorsäure und Tetramethylammoniumbromid mit 1 Mol Wasserstoffbromid reagiert. Die Ausbeute an Monoglycidyläther, insbesondere an Verbindung der Formel 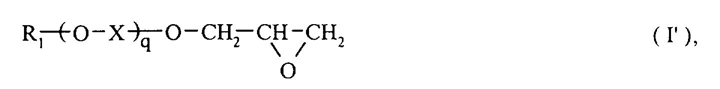 liegt z.B. oberhalb 70 Mol-%, vorzugsweise oberhalb 75 Mol-%.

Als Nebenprodukte können vor allem solche Verbindungen vorkommen, in denen 2 oder mehr Mol Epichlorhydrin nacheinander mit 1 Mol Alkoholpolyglykoläther T-H reagiert haben (d.h. z.B. chlormethylsubstituierte Epoxyde), ferner auch entsprechend nicht umgesetzte Alkoholpolyglykoläther T-H, und gegebenenfalls, in geringen Mengen, Glycidole. Im Hinblick auf die Herstellung der erfindungsgemäßen modifizierten Polysiloxane ist eine Trennung nicht erforderlich, und es können als (H) Produkte eingesetzt werden, deren Epoxyäquivalentgewicht z.B. im Bereich von 100 bis 150 %, vorzugsweise 100 bis 130 %, bezogen auf den einfachen Monoglycidyläther, besonders der Formel (I) oder (I'), liegt.

Die primären und/oder sekundären Aminogruppen in den mit (H) umzusetzenden Aminopolysiloxanen (S) sind insbesondere Teil der Si-gebundenen Aminoalkylgruppen oder Amino-monooder -oligo-(alkylenamino)-alkyl-Gruppen und können solche sein, wie sie üblicherweise in sonst nicht weitermodifizierten Aminopolysiloxanen vorkommen und durch Verwendung entsprechender Monomeren bei der Herstellung der jeweiligen Aminopolysiloxane entstehen können. Ihre Alkyl- und Alkylengruppen sind vorteilhaft solche mit 2 bis 4 Kohlenstoffatomen und können linear oder, wenn sie 3 oder 4 Kohlenstoffatome enthalten, auch verzweigt sein. Vorzugsweise enthalten die an Si gebundenen Aminoalkylgruppen 3 oder 4 Kohlenstoffatome im Alkylrest; die zwei Aminogruppen verbindenden Alkylengruppen enthalten vorzugsweise 2 oder 3 Kohlenstoffatome. Vornehmlich sind die primären Aminogruppen und die gegebenenfalls vorhandenen sekundären Aminogruppen in (S) Bestandteile von an Siliciumatome des Polysiloxangrundgerüstes gebundenen Aminoalkyl-Gruppen oder Amino-mono- oder -oligo-(alkylenamino)-alkyl-Gruppen der Formel 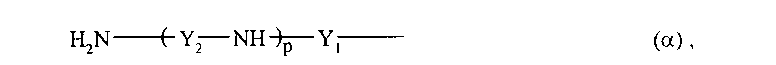 worin
Y₁ Propylen-1,2 oder -1,3 oder 2-Methyl-propylen-1,3,
Y₂ Äthylen oder Propylen
und
p 0, 1 oder 2
bedeuten.

Y₁ steht vorteilhaft für 2-Methyl-propylen-1,3 oder vorzugsweise für Propylen-1,3; Y₂ steht insbesondere für Propylen-1,2 oder -1,3 oder vorzugsweise für Äthylen; p steht vorteilhaft für 0 oder 1, vorzugsweise für 1.

Vorzugsweise sind die Reste der Formel (α) solche der Formel 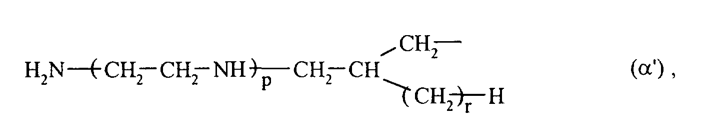 worin r 0 oder 1 bedeutet,

besonders bevorzugt der Formel 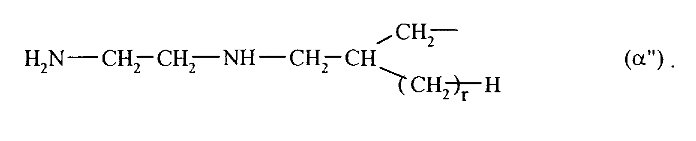 Der Index r steht besonders bevorzugt für 0.

Durch die Umsetzung mit (H) werden die jeweiligen Reste (ε) bzw. 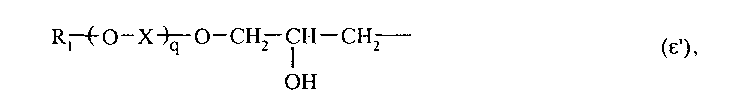 in die Aminoalkylgruppen oder Amino-mono- oder -oligo-(alkylenamino)-alkyl-Gruppen, insbesondere in diejenigen der Formel (α), eingeführt. Dabei reagiert die primäre Aminogruppe vorrangig, so daß ein erster Rest (ε) ein Wasserstoffatom der primären Aminogruppe ersetzt, und weitere Reste (ε) in statistischer Verteilung Wasserstoffatome der vorhandenen sekundären Aminogruppen ersetzen. Gewünschtenfalls können noch acylierbare Aminogruppen acyliert werden und/oder gegebenenfalls vorhandene alkylierbare Aminogruppen alkyliert oder/und benzyliert werden.

Durch die Acylierung werden vorzugsweise niedrigmolekulare Acylreste eingeführt, vorteilhaft solche mit 2 bis 4 Kohlenstoffatomen, z.B. Acetyl, Propionyl oder Butyryl, worunter Acetyl besonders bevorzugt ist. Durch die Alkylierung bzw. Benzylierung können ebenfalls vorzugsweise niedrigmolekulare Alkylreste eingeführt werden, vorteilhaft Alkylreste mit 1-4 Kohlenstoffatomen, vorzugsweise Äthyl oder Methyl, oder bzw. Benzylreste.

Zur Acylierung können an sich bekannte Acylierungsmittel verwendet werden, wie sie an sich zur Acylierung von Aminogruppen bekannterweise eingesetzt werden, z.B. Säurechloride oder -anhydride von aliphatischen C₂₋₄-Monocarbonsäuren, oder noch (C₁₋₄-Alkyl)-percarbonate oder Di-(C₁₋₄-alkyl)-oxalate. Die Acylierung kann unter an sich üblichen Bedingungen erfolgen. Die Acylierung mit einem Säureanhydrid oder -chlorid kann z.B. durch einfaches Vermischen der Reaktionkomponenten, gegebenenfalls in Gegenwart von Wasser oder/und einem organischen Lösungsmittel, unter milden Temperaturbedingungen erfolgen, z.B. bei Temperaturen im Bereich von 10 bis 40°C, am einfachsten bei Raumtemperatur. Wenn ein Säureanhydrid oder -chlorid zur Aminacylierung verwendet wird, kann gleichzeitig die entsprechende protonierte Form einer im Molekül gegebenenfalls noch vorhandenen, basischen Aminogruppe entstehen.

Zur Alkylierung oder Benzylierung können an sich bekannte Alkylierungs- bzw. Benzylierungsmittel eingesetzt werden, wie sie zur Alkylierung oder Benzylierung von primären, sekundären oder auch tertiären Aminogruppen an sich bekannterweise eingesetzt werden können, z.B. Alkylhalogenide oder Dialkylsulfate, z.B. Dimethylsulfat, Diäthylsulfat oder Methyl- oder Äthylchlorid oder -bromid, oder Benzylchlorid. Wenn die quatemäre Ammoniumform hergestellt werden soll, ist es von Vorteil, Benzylylchlorid oder vorzugsweise ein Dialkylsulfat dafür zu verwenden. Dabei entsteht das entsprechende Gegenion (besonders Chlorid- oder Alkylsulfation) zum jeweiligen gebildeten quaternären Ammoniumion.

Diese Umsetzung kann auf analoge Weise zu bekannten Alkylierungen bzw. Benzylierungen durchgeführt werden, z.B. wäßrig oder in Anwesenheit von organischen Lösungsmitteln, vorteilhaft bei Temperaturen unterhalb 130°C, vorzugsweise im Bereich von 30 bis 120°C, besonders bevorzugt 40 bis 100°C.

Die ersetzbaren Wasserstoffatome der basischen Aminogruppen können auf an sich bekannte Weise durch Titration bestimmt werden und der Umsetzungsgrad von (S) mit (H) wird vorteilhaft auf den gesamten titrierten Aminowasserstoff von (S) bezogen.

Die Umsetzung von (S) mit (H) wird vorteilhaft so geführt, daß praktisch alle primären Aminogruppen von (S) mit (H) so umgesetzt werden, daß sie mindestens monosubstituiert sind und von den verbleibenden sekundären mindestens soviele Wasserstoffatome durch einen Rest (ε) ersetzt werden, daß der erforderliche Substitutionsgrad von durchschnittlich mindestens 1,5, vornehmlich mindestens 1,8, vorzugsweise mindestens 2 Resten der Formel (ε) pro Si-gebundener Aminoalkylgruppe oder Amino-mono- oder -oligo-(alkylenamino)-alkyl-Gruppe erreicht wird. Der Anteil an sekundären Aminogruppen die mit (H) umgesetzt werden, kann je nach Anzahl sekundärer Aminogruppen in dieser Si-gebundenen Gruppe, insbesondere je nach der Bedeutung von p im Rest der Formel (α) bzw. (α'), variieren. Bei p = 0 beträgt dieser Anteil insbesondere mindestens die Hälfte, bzw. 50 bis 100 % der sekundären Aminogruppen, vorteilhaft 80 bis 100 %, vorzugsweise 95 bis 100 % davon; bei p = 1, mindestens ¼, insbesondere 25 bis 100 % der sekundären Aminogruppen, vorteilhaft 50 bis 100 %, vorzugsweise 80 bis 100 % davon; bei p = 2, mindestens ¹/6, insbesondere 16,7 bis 100 % der sekundären Aminogruppen, vorteilhaft 40 bis 100 %, vorzugsweise 60 bis 100 % davon.

Die Umsetzung von (S) mit (H) kann z.B. bei p ≥ 1 vorteilhaft bis zu einem Substitutionsgrad im Bereich von 40 bis 100%, vorzugsweise 45 bis 100%, besonders 50 bis 100%, bei p=0 vorteilhaft bis zu einem Substitutionsgrad im Bereich von 75 bis 100 %, vorzugsweise 80 bis 100 %, besonders 90 bis 100 %, [bezogen auf die reaktionsfähigen Wasserstoffatome der basischen Aminogruppen in (S)] durchgeführt werden.

Die nach der Umsetzung von (S) mit (H) übrigen reaktionsfähigen Wasserstoffatome der basischen Aminogruppen können gegebenenfalls mindestens teilweise (z.B. 5 bis 100 %, insbesondere 10 bis 90 %) mittels Acylierung durch Acylreste aliphatischer Monocarbonsäuren, vorzugsweise solchen mit 2-4 Kohlenstoffatomen, ersetzt werden oder mittels Alkylierung bzw. Benzylierung durch Methyl oder Äthyl oder Benzyl ersetzt werden. Die Alkylierung und/oder Benzylierung kann, je nach vorhandenen Aminogruppen und eingesetzten Alkyierungs- bzw. Benzylierungsmitteln, gegebenenfalls zu entsprechenden sekundären oder tertiären Aminogruppen oder bis zur quaternären Ammoniumstufe führen. Basische Aminogruppen die nicht quaterniert werden, können gegebenenfalls protoniert werden.

Am einfachsten werden nach der Umsetzung von (α) mit (H) die allfälligen noch alkylierbaren Aminogruppen weder weiter alkyliert noch weiter benzyliert, insbesondere auch nicht quaterniert, während es, nach einem Aspekt der Erfindung von Vorteil ist, mindestens einen Teil der acylierbaren Aminogruppen zu acylieren. Nach einer weiteren vorteilhaften Ausführungsform der Erfindung werden die noch protonierbaren Aminogruppen mindestens teilweise protoniert.

Die bevorzugten aus den Si-gebundenen Aminoalkylgruppen oder Amino-mono- oder -oligo--(alkylenamino)-alkyl-Gruppen, insbesondere aus den Si-gebundenen Gruppen (α), stammenden, mit (H) umgesetzten und gegebenenfalls acylierten und/oder gegebenenfalls weiter alkylierten und/oder benzylierten Gruppen, können durch die folgende durchschnittliche Formel dargestellt werden 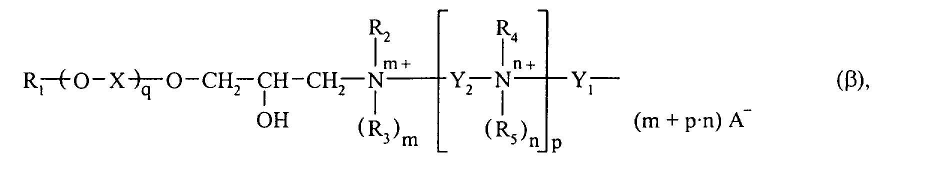 worin
- m: 0 oder 1,
- n: 0 bis 1,
- R₂: Wasserstoff, C₁₋₂-Alkyl, Benzyl, oder einen Rest der Formel (ε') oder, wenn m = 0 ist, auch einen Rest der Formel R₆ - CO -,
- R₃: Wasserstoff oder, wenn R₂ für C₁₋₂-Alkyl, Benzyl oder einen Rest der Formel (ε') steht, auch C₁₋₂-Alkyl oder Benzyl,
- R₄: Wasserstoff, C₁₋₂-Alkyl, Benzyl, einen Rest der Formel (ε') oder, wenn n = 0 ist, auch einen Rest der Formel R₆ -CO-,
- R₅: Wasserstoff oder, wenn R₄ für C₁₋₂-Alkyl oder einen Rest der Formel (ε') steht, auch C₁₋₂-Alkyl oder Benzyl,
- R₆: C₁₋₃-Alkyl
und
- A: ein einwertiges Anion
bedeuten, mit den Maßgaben daß
mindestens 50 % der q Alkylengruppen in der Bedeutung von X Äthylen bedeuten und die Reste der Formel (β) durchschnittlich mindestens 1,5 Reste der Formel (ε') pro Rest der Formel (β) enthalten.

Bevorzugte, aus den Gruppen der Formeln (α') bzw. (α") stammende Gruppen können durch die folgenden durchschnittlichen Formeln 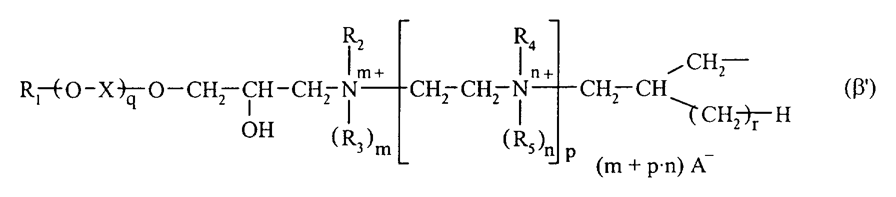 und 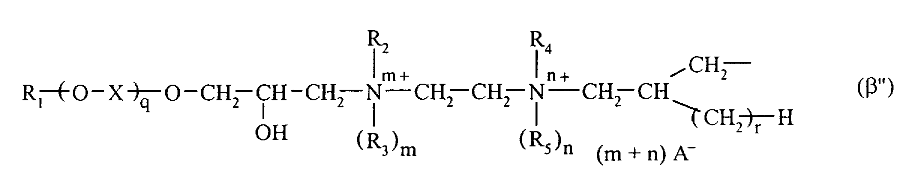 dargestellt werden, wobei vorzugsweise mindestens eines von R₂ und R₄ auch für einen Rest der Formel (ε') steht.

Darunter sind auch die nicht quaternierten, besonders diejenigen der Formel 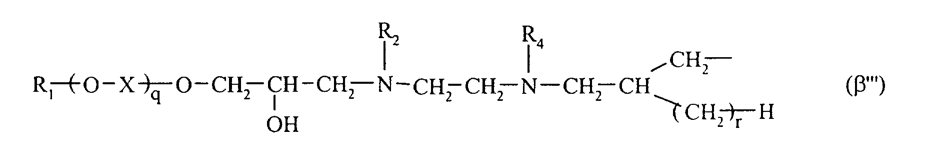 und deren protonierten Derivate, bevorzugt.

Die aus den Si-gebundenen Aminoalkylgruppen oder Amino-mono- oder -oligo-(alkylenamino)-alkyl-Gruppen insbesondere der Formel (α), durch die oben beschriebene Umsetzung hergestellten substituierten Derivate, insbesondere der Formel (β), enthalten die jeweiligen Sustituenten in herstellungsentsprechender Verteilung. So können die bevorzugten aus den Resten der Formel (α") stammenden Gruppen (β") hauptsächlich durch die folgenden Formeln dargestellt werden: 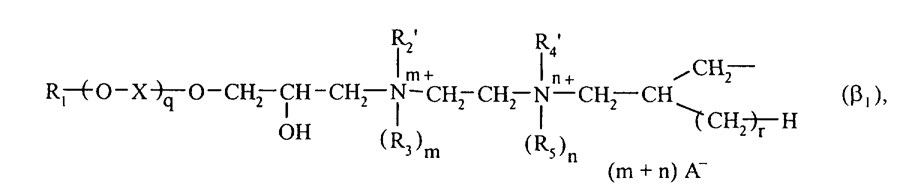 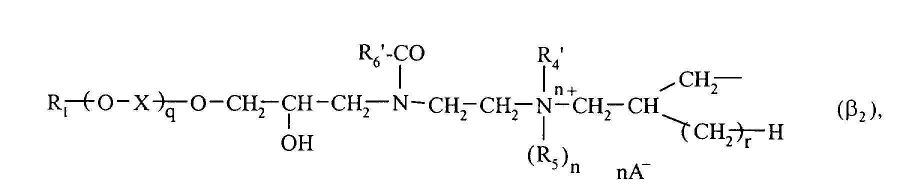 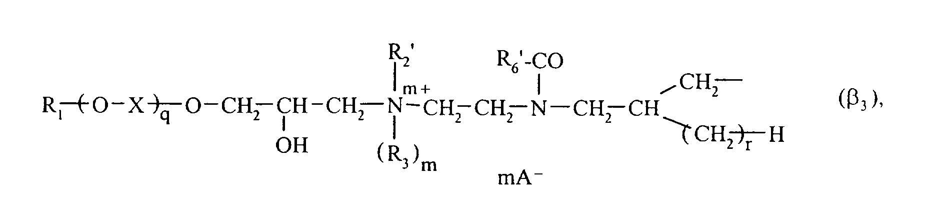 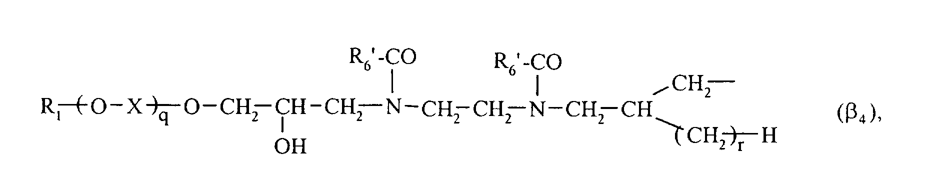 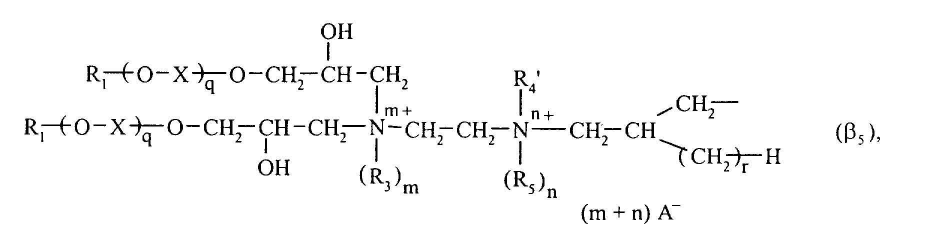 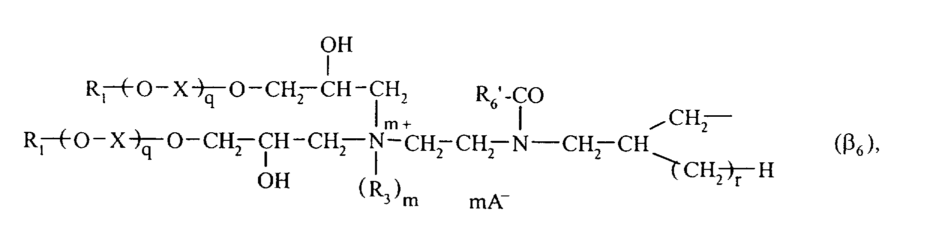 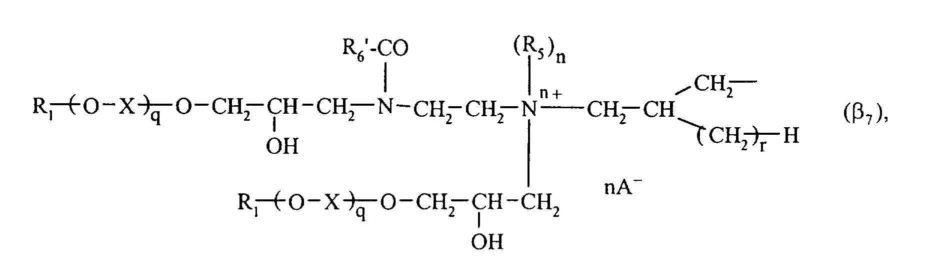 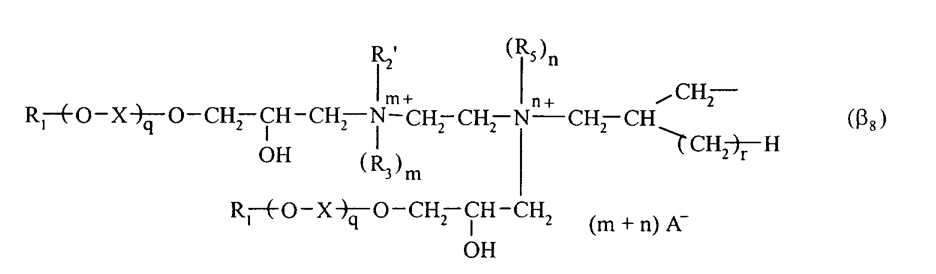 und/oder 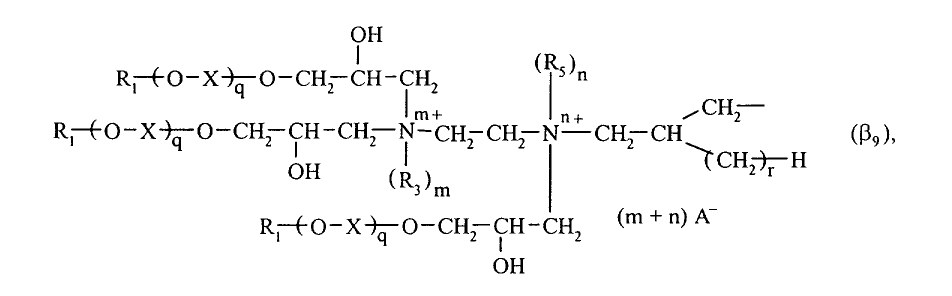 worin
R₂' Wasserstoff, Methyl, Äthyl oder Benzyl,
R₄' Wasserstoff, Methyl, Äthyl oder Benzyl
und
R₆' Methyl oder Äthyl
bedeuten.

In den erschöpfend oder nahezu erschöpfend mit (H) umgesetzten überwiegen entsprechend diejenigen, welche (p+2) Reste der Formel (ε), vorzugsweise (ε'), enthalten, unter denjenigen der obigen Formeln (β₁) bis (β₉) also diejenigen der Formel (β₉), und können von enstsprechend kleineren Anteilen an niedriger durch (ε) bzw. (ε') substituierten begleitet sein, besonders solchen der Formeln (β₅) und/oder (β₈).

In den zu einem niedrigeren Umsetzungsgrad mit (H) umgesetzten, z.B. in denjenigen in welchen 50 bis 75 % der ersetzbaren stickstoffgebundenen Wasserstoffatome von (α), besonders worin p 1 oder 2 bedeutet, vorzugsweise von (α') bzw. (α"), durch Reste der Formel (ε) bzw. (ε') ersetzt sind und die übrigen gegebenenfalls acyliert und/oder alkyliert und/oder benzyliert sind, über-wiegen entsprechend diejenigen, welche 2 bis (p+1) Reste der Formel (ε), vorzugsweise (ε'), enthalten, unter denjenigen der obigen Formeln (β₁) bis (β₉) also diejenigen der Formeln (β₅), (β₆), (β₇) und/oder (β₈), neben kleineren Anteilen an (β₉) und/oder (β₁), (β₂), (β₃) und/oder (β₄).

Die aus Si-gebundenen Aminoalkylresten, besonders aus den Resten der Formel

H₂N―Y₁- (α''')

insbesondere 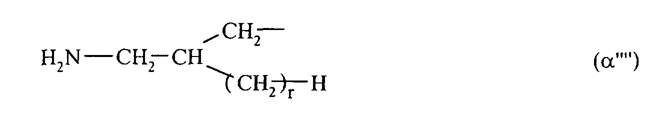 stammenden sind vorteilhaft erschöpfend oder nahezu erschöpfend mit (H) umgesetzt, sodaß die mit Resten (ε) bzw. (ε') disubstituierten überwiegen, bzw. in den bevorzugten aus (α'''') stammenden, hauptsächlich die Reste der Formel 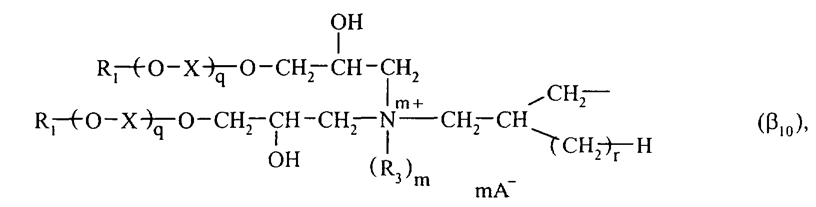 überwiegen, und im Produkt verhältnismäßig kleinere Anteile an durch Reste der Formel (ε) bzw. (ε') monosubstituierten gegebenenfalls vorkommen können, insbesondere, in den bevorzugten aus (α"") stammenden, hauptsächlich die Reste der Formel

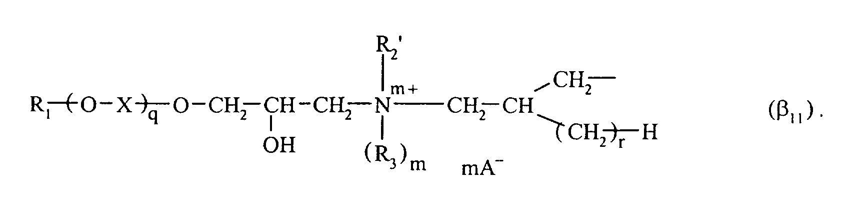

Als Ausgangspolysiloxane (S) eignen sich beliebige aminosubstituierte Polysiloxane, die entsprechende Si-gebundene Aminoalkylgruppen bzw. Amino-mono- oder -oligo-(alkylenamino)--alkyl-Gruppen enthalten. Es eignen sich im allgemeinen beliebige entsprechende Aminopolysiloxane mit polykationischem bzw. polybasischem Charakter, im wesentlichen solche, die aus wiederkehrenden Dimethylsiloxyeinheiten und Aminosiloxyeinheiten aufgebaut sind. Sie können einen linearen Aufbau oder auch einen verzweigten und/oder vernetzten Aufbau (z.B. einfach oder mehrfach verzweigt oder vernetzt) aufweisen. Die Endgruppen können einen reaktiven Substituenten, insbesondere z.B. Hydroxy oder Alkoxy, enthalten oder gegebenenfalls auch blockiert sein; z.B. mit Trimethylsiloxy. Nach einer weiteren Variante können die Endgruppen auch die oben genannten Aminoalkylgruppen bzw. Amino-mono- oder -oligo-(alkylenamino)--alkyl-Gruppen enthalten.

Vorzugsweise sind die Aminopolysiloxane (S) aus wiederkehrenden Einheiten der folgenden Formeln aufgebaut: 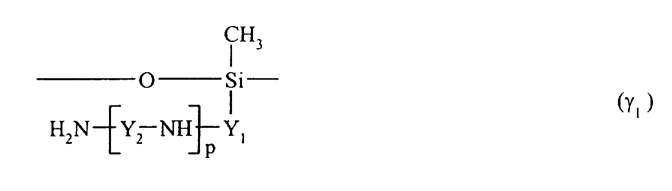 und

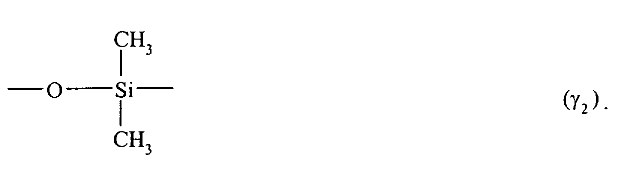

Die Endgruppen entsprechen vorzugsweise den Formeln: 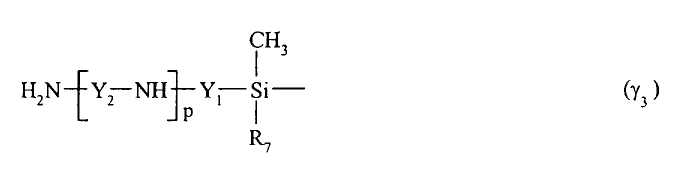 und/oder 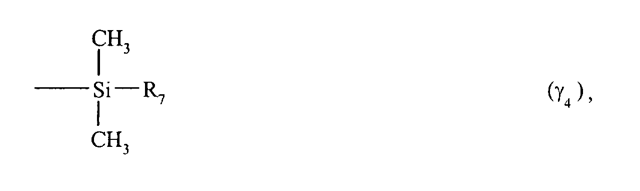 worin R₇ Methyl, Hydroxy, Methoxy oder Äthoxy bedeutet.

Gegebenenfalls kann (S) auch Si-verzweigte Einheiten der Formel 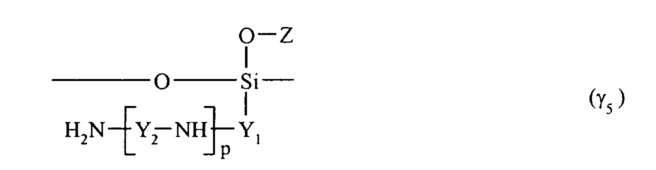 enthalten, worin
- Z: einen Si-gebundenen (Poly)siloxan- oder Silylrest bedeutet, der eine oder mehrere der Gruppen der Formel (γ₁), (γ₂), (γ₃) und/oder (γ₄) sowie gegebenenfalls weitere solche Si-Verzweigungen bzw. Vernetzungen (z.B. einfach oder mehrfach verzweigt oder/und vemetzt) enthält.

Die Aminopolyorganosiloxane (S) können durch an sich gebräuchliche typische Kennwerte gekennzeichnet werden, z.B. durch ihr durchschnittliches Molekulargewicht und den Gehalt an Aminstickststoff, sowie auch durch ihre Viskosität. Das durchschnittliche Molekulargewicht und der Gehalt an Aminstickststoff der Aminopolyorganosiloxane (S) können in weiten Bereichen schwanken, wobei zum Zwecke der Erfindung diejenigen mit einer niedrigen Aminzahl vomehmlich geeignet sind, besonders diejenigen mit einer Aminzahl ≤ 3.

Vorteilhaft weisen die Ammopolysiloxane (S) eine Viskosität im Bereich von 500-30'000, vornehmlich 200-20'000, vorzugsweise 300-3000 cP auf (Brookfield Rotationsviskosimeter RV, Spindel Nr. 5, 20°C). Die Aminzahl von (S) liegt vorteilhaft im Bereich von 0,05 bis 3, vorzugsweise 0,1 bis 2, besonders bevorzugt 0,15 bis 1. Das durchschnittliche Molekulargewicht $\overline{\text{M}}$_{w} von (S) liegt vorteilhaft im Bereich von 1500 bis 150'000, vorteilhaft 2000 bis 100'000, vorzugsweise 4000 bis 40'000.

Schematisch können die aus den oben genannten Einheiten bestehenden Aminopolysiloxane (S) insbesondere durch die folgende durchschnittliche Sammelformel dargestellt werden: 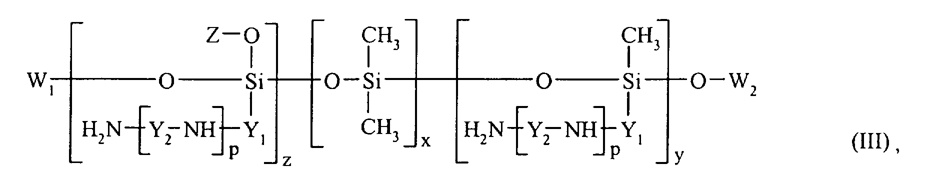 worin W₁ und W₂ jeweils eine Gruppe der Formel (γ₃) oder (γ₄) bedeuten, das Molekül mindestens eine Gruppe der Formel (α) bzw. (γ₁), (γ₃) und/oder (γ₅) aufweist und die Indizes x, y und z so gewählt werden, daß das Polymere die oben angegebenen Werte für Aminzahl, Viskosität und Molekulargewicht aufweist. [Die obige Formel (III) dient bloß zur Veranschaulichung der vorkommenden Monomereinheiten und deren Anzahl, nicht aber ihrer Verteilung oder Stellung im Polymermolekül]. Das Verhältnis der Anzahl Dimethylsiloxyeinheiten zur Anzahl Aminoalkyl-siloxyeinheiten und/oder Amino-mono- oder -oligo-(alkylenamino)-alkyl-siloxyeinheiten, insbesondere der Formel 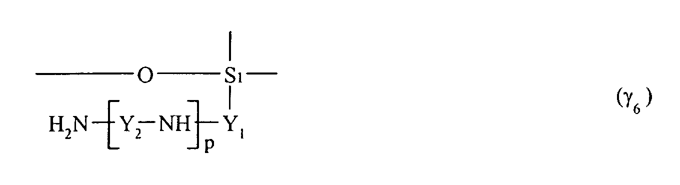 liegt vorteilhaft im Bereich von 3/1 bis 600/1, vorzugsweise 10/1 bis 200/1.

Die Polysiloxane (S) können auf an sich bekannte Weise oder analog zu bekannten Methoden hergestellt werden, z.B. durch Aminoalkylierung von Polysiloxanen, die reaktive Si-gebundene Wasserstoffatome aufweisen, oder vornehmlich durch Copolymerisation von aminogruppenhaltigen Silanen mit entsprechenden nicht-ionogenen Silanen oder Polysiloxanen oder zyklischen Siloxanen.

Die Aminoalkylierung kann unter an sich bekannten Bedingungen unter Verwendung üblicher Aminoalkylierungs- bzw. Hydrosilylierungsmitteln erfolgen, z.B. mit Allylamin.

Zur Copolymerisation werden vorzugsweise die aminogruppenhaltigen Silane mit α,ω-Dihydroxy-polydimethylsiloxan, vorteilhaft mit einem durchschnittlichen Molekulargewicht $\overline{\text{M}}$_{W} im Bereich von 500 bis 10000, vorzugsweise 1000 bis 7000, oder mit zyklischen Siloxanen, z.B. Hexamethylcyclotrisiloxan, Octamethylcyclotetrasiloxan, Decamethylcyclopentasiloxan, Dodecamethylcyclohexasiloxan und technischen Gemischen von zwei oder mehreren davon, copolymerisiert. Als Silane kommen vornehmlich an Si aminoalkyl-substituierte oder amino-mono- oder -oligo-(alkylenamino)-alkyl-substituierte Trimethoxy- oder -äthoxysilane oder Dimethoxy- oder -äthoxymethylsilane in Betracht, worin die Si-gebundene Aminoalkylgruppe oder Amino-monooder -oligo-(alkylenamino)-alkyl-Gruppe vornehmlich der Formel (α), vorzugsweise (α'), besonders (α"), entspricht.

Die Copolymerisation kann auf an sich bekannte Weise durchgeführt werden, vornehmlich durch Umsetzung der Reaktionsteilnehmer bei mäßiger oder erhöhter Temperatur, gegebenenfalls unter reduziertem Druck, insbesondere bei Temperaturen im Bereich von 15-180°C, gegebenenfalls in Gegenwart eines Katalysators und gewünschtenfalls unter Einsatz von endblockierenden Gruppen, z.B. mit Hexamethyldisiloxan. Als Katalysatoren können sowohl Säuren (insbesondere Ameisensäure, Essigsäure, Schwefelsäure, saure Ionenaustauscher oder Trifluormethansulfonsäure) als auch Alkalimetall- oder Ammoniumverbindungen eingesetzt werden, z.B. Alkalimetall- oder Ammoniumsilanolate (z.B. Kalium- oder Tetramethylammoniumsilanolat) sowie Alkalimetallhydroxyde oder Ammoniumhydroxyde, welche mit den jeweiligen Silanen die entsprechenden Silanolate in situ bilden, oder sonst Alkalimetallhydroxyde, -carbonate oder -bicarbonate (z.B. Kaliumhydroxyd, Natriumhydroxyd oder Natriumbicarbonat) oder noch Benzyltrimethylammoniumhydroxyd oder Tetrabutylammoniumhydroxyd. Gewünschtenfalls kann in Gegenwart eines inerten Lösungsmittels polymerisiert werden, das dann, unter Polymerisationsbedingungen oder anschließend entfernt, beispielsweise abdestilliert, werden kann.

Wird ein aminogruppenhaltiges Trimethoxysilan zur Einführung der Einheiten der Formel (γ₁) verwendet, kann je nach Umsetzungsbedingungen die Methoxygruppe zur Hydroxygruppe verseift werden oder an dieser Stelle eine Verzweigung des Copolymeren erfolgen, wie mit der Formel (γ₅) gezeigt.

Je nach gewählten Herstellungsbedingungen können die aminogruppenhaltigen Einheiten im Molekül - z.B. im Molekül der Formel (III) - statistisch verteilt sein oder endständig sein oder wie in Blockpolymeren gruppiert sein oder noch sich gegen die Extremitäten der linearen Ketten anhäufen.

Für die Herstellung der erfindungsgemäßen modifizierten Polysiloxane (S_{H}) sind diejenigen Polysiloxane (S) bevorzugt, welche einen gegebenenfalls verzweigten, vorwiegend linearen Aufbau des Polysiloxangrundgesetzes aufweisen, worin die Einheiten der Formel (γ₂) neben Einheiten der Formel (γ₁) überwiegen.

Erfindungsgemäß werden Polysiloxane hergestellt, worin die vorhandenen Si-gebundenen Aminoalkyl-Gruppen oder Amino-mono- oder -oligo-(alkylenamino)-alkyl-Gruppen, insbesondere die Gruppen der Formel (α) bzw. (α') oder (α"), durch Einführung der Reste (ε) bzw. (ε') und gegebenenfalls weiterer Substituenten, wie oben beschrieben, am Stickstoff entsprechend substituiert werden, insbesondere zu Gruppen der Formel (β) bzw. (β') wie oben beschrieben. Die so hergestellten Polysiloxane enthalten insbesondere wiederkehrende Einheiten der Formeln 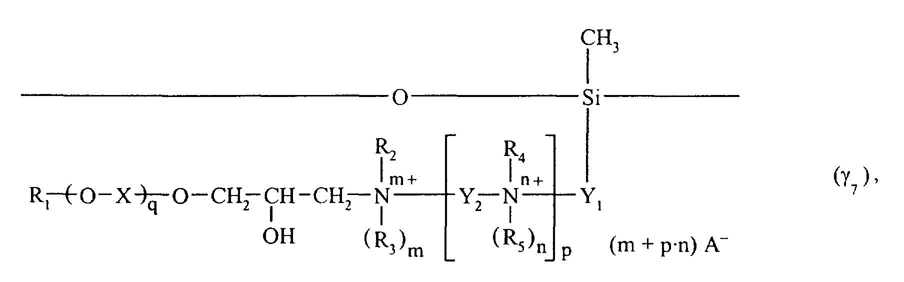 und (γ₂), und endständige, sauerstoffgebundene Silylgruppen der Formel (γ₃) und/oder 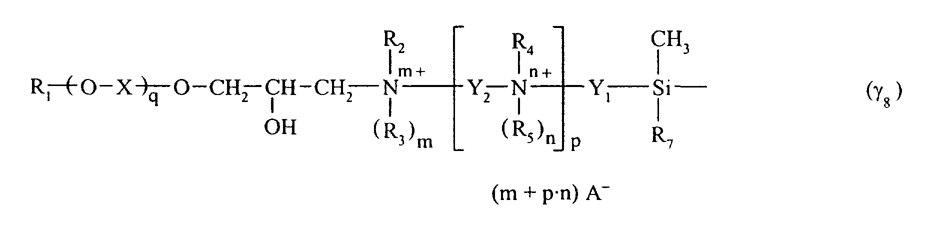 und, wenn die Ausgangspolysiloxane (S) Verzweigungen, insbesondere wie in der Formel (γ₅), enthielten, auch entsprechend verzweigte Gruppen, insbesondere solche der Formel 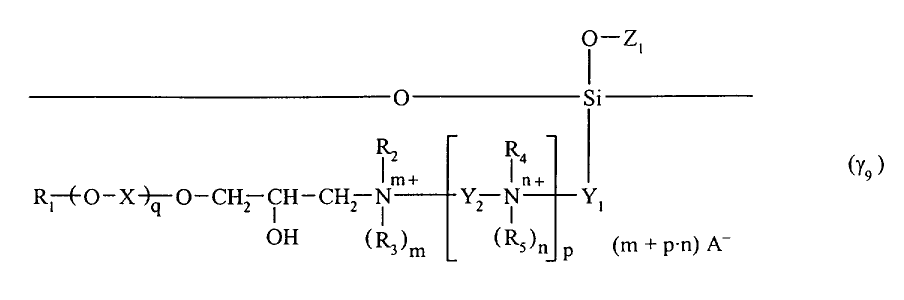 worin
- Z₁: einen S₁-gebundenen (Poly)siloxan- oder Silylrest bedeutet, der eine oder mehrere der Gruppen der Formel (γ₂), (γ₄), (γ₇) und/oder (γ₈) sowie gegebenenfalls weitere solche Si-Verzweigungen enthält,
mit der Bedingung, daß im Molekül durchschnittlich mindestens 1,5, vorteilhaft mindestens 1,8, vorzugsweise mindestens zwei Reste der Formel (ε') pro insgesamt vorkommende Si-gebundene Aminoalkyl- oder Amino-mono- oder -oligo-(alkylenamino)-alkyl-gruppe der Formeln (β) vorhanden sind.

Wenn in den so hergestellten Polysiloxanen in den Resten der Formel (β) m und/oder n mindestens teilweise gleich null sind und der entsprechende Substituent R₂ bzw. R₄ nicht für einen Acylrest R₆-CO- steht, können diese Reste bzw. die Polysiloxane gewünschtenfalls protoniert werden. Zur Protonierung können an sich bekannte Säuren verwendet werden, z.B. Mineralsäuren, Schwefelsäuremono-C₁₋₂-Alkylester und/oder niedrigmolekulare organische Carbonsäuren. Als Mineralsäure kann z.B. Salzsäure erwähnt werden; als niedrigmolekulare organische Carbonsäuren kommen vornehmlich aliphatische vorzugsweise gesättigte C₁₋₆-Carbonsäuren in Betracht, z.B. Ameisensäure, Essigsäure, Propionsäure, Milchsäure und Citronensäure. Unter den genannten Säuren sind vor allem die Salzsäure und die Essigsäure bevorzugt.

Das durchschnittliche Molekulargewicht der erfindungsgemäßen substituierten Aminopolyorganosiloxane (S_{H}), insbesondere so hergestellt wie oben beschrieben, kann in einem breiten Bereich variieren, z.B. je nach gewählten Ausgangsprodukten, Mengenverhältnissen der Reagenzien und Reaktionbedingungen, insbesondere Polymerisations- und Substitutionsbedingungen, z.B. im Bereich von 1500 bis 500'000, vorteilhaft 3000 bis 200'000, vorzugsweise 5000 bis 100'000. Der Stickstoffgehalt von (S_{H}) - insbesondere stammend aus den Aminogruppen in (S) durch Umsetzung mit (H) und gegebenenfalls weitere Substitution zu substituierten Aminound/oder Ammoniumgruppen und gegebenenfalls Amidgruppen und mitumfassend auch gegebenenfalls übrige nicht umgesetze Aminogruppen - ist vorzugsweise niedrig und liegt vorteilhaft im Bereich von 0,03 bis 4,2 Gew.-%, vorteilhaft 0,1 bis 2,8 Gew.-%, vorzugsweise 0,16 bis 1,4Gew.-%.

Die erfindungsgemäßen Polysiloxane (S_{H}), insbesondere so hergestellt wie oben beschrieben, weisen eine deutliche, mehr oder weniger ausgeprägte, Hydrophilie auf und können mit Wasser zu wäßrigen Präparaten (W_{SH}) verdünnt werden. Gewünschtenfalls können dafür auch Emulgatoren (E) zugegeben werden.

Als Emulgatoren (E) eignen sich im allgemeinen beliebige Emulgatoren, die Polysiloxane emulgieren, vornehmlich nicht-ionogene, vorwiegend hydrophile O/W (Öl-in-Wasser)-Emulgatoren (das Öl "O" steht in diesem Fall für Silikonöl). Vorteilhaft sind die Emulgatoren (E) solche wie oben für T-H beschrieben, vorzugsweise solche der allgemeinen durchschnittlichen Formel (II), insbesondere wie oben definiert und vorzugsweise auch wie oben bevorzugt.

Die Emulgatoren (E) können in beliebigen geeigneten Mengenverhältnissen zu den modifizierten Polysiloxanen (S_{H}) eingesetzt werden, wie es für den jeweils gewünschten Zweck geeignet bzw. bevorzugt ist. Es eignen sich z.B. Gewichtsverhältnisse (E)/(S_{H}) im Bereich von 1/100 bis 50/100, vorzugsweise 2/100 bis 20/100.

Gewünschtenfalls können Formulierungszusätze (F) zugegeben werden. Es können Formulierungszusätze (F) eingesetzt werden, wie sie für die Erhaltung der physikalischen Form der Formulierung geeignet sind und/oder um eine geeignete Qualität der Flüssigformulierung zu erzielen, z.B. im Hinblick auf den Verwendungszweck und/oder auf die Art der vorgesehenen Verpackung und Lagerung und/oder des vorgesehenen Transportmittels für die Belieferung.

Als Formulierungszusätze (F) kommen vornehmlich die folgenden in Betracht:
- (F₁): Mittel zur Beeinflussung der flüssigen Form des wäßrigem Präparates,
- (F₂): Mittel zum Schutz gegen die schädigende Wirkung von Mikroorganismen
und/oder
- (F₃): Säuren und/oder Basen zur pH-Einstellung.

Als (F₁) kommen im wesentlichen solche Hilfsmittel in Betracht, die geeignet sind, um die kolloidale Form und/oder das Fließverhalten der wäßrigen Präparate (W_{SH}) zu beeinflussen, insbesondere (F₁') Hydrotropika und (F₁") Rheologiehilfsmittel.

Als Hydrotropika (F₁') können an sich übliche Verbindungen erwähnt werden, z.B. Harnstoff, C₂₋₆-Alkandiole (z.B. Hexylenglykol, Butandiol, Propylenglykol) oder Di-(C₂₋₄-alkylen)-glykole (z.B. Dipropylenglykol), ihre Monoäther niedrigmolekularer aliphatischer Alkohole, z.B. von C₁₋₄-Alkanolen (z.B. Butylglykol), und Oligoäthylenglykole (z.B. mit einem durchschnittlichen Molekulargewicht im Bereich von 200 bis 400). Sie können in an sich üblichen Konzentrationen eingesetzt werden, z.B. im Bereich von 1 bis 50 Gew.-%, vornehmlich 2 bis 25 Gew.-%, bezogen auf (S_{H}).

Als Rheologiehilfsmittel (F₁") sind hier im allgemeinen solche Hilfsmittel gemeint, die geeignet sind, um die Viskosität des wäßrigen Präparates zu beeinflussen, insbesondere herabzusetzen oder auf bestimmte Werte einzustellen, vor allem wasserlösliche Salze (mit einer Wasserlöslichkeit von z.B. mindestens 3 Gew.-% bei RT), vorteilhaft Alkalimetallsalze organischer oder anorganischer Säuren, z.B. Natriumacetat, -chlorid oder -cumolsulfonat. Sie können in sehr niedrigen Konzentrationen eingesetzt werden, z.B. im Bereich von 0,005 bis 1 Gew.-%, vornehmlich 0,01 bis 0,5 Gew.-%, vorzugsweise 0,025 bis 0,25 Gew.-% bezogen auf (S_{H}).

Als Mittel (F₂) zum Schutz gegen die schädigende Wirkung von Mikroorganismen kommen vornehmlich Mittel zur Hemmung des Wachstums schädigender Bakterien oder sonstiger Mikrobien, oder auch Mikrobicide, vor allem Fungicide, in Betracht. Sie können in sehr geringen Mengen eingesetzt werden. Es eignen sich im allgemeinen solche Produkte wie sie im Handel erhältlich sind, und sie können auch in den entsprechenden empfohlenen Konzentrationen eingesetzt werden, z.B. in Konzentrationen im Bereich von 0,001 bis 0,5 Gew.-%, vorzugsweise 0,04 bis 0,1 Gew.-% Wirksubstanz bezogen auf das wäßrige Präparat (W_{SH}).

Als (F₃) können bekannte Säuren (z.B. wie oben zur Protonierung beschrieben) oder Basen (z.B. Alkalimetallhydroxyde oder Ammoniumhydroxyd) eingesetzt werden, je nach Bedarf, wie es erforderlich sein kann, um den jeweils angestrebten gewünschten pH des Präparates (W_{SH}) einzustellen.

Wie oben erwähnt, können die erfindungsgemäßen Polysiloxane (S_{H}) mit Wasser zu wäßrigen Präparaten (W_{SH}) verdünnt werden. Gegebenenfalls kann dafür auch mindestens ein Emulgator (E) - wie oben erwähnt - zugegeben werden. Durch die Zugabe von weiteren Formulierungszusätzen, besonders (F₁) und/oder (F₃), kann der physikalische Charakter des wäßrigen Präparates (W_{SH}) zusätzlich beeinflußt werden. Da die Polysiloxane (S_{H}) - auch wenn sie aus Polysiloxanen (S) mit einer sehr niedrigen Aminzahl stammen - sich durch eine deutliche Hydrophilie auszeichnen, können sie, auch ohne Zuhilfenahme eines Emulgators oder Formulierungszusatzes, mit Wasser zu einem kolloidalen, wäßrigen Präparat, insbesondere zu einem inkohärenten, wäßrigen, kolloidalen System, formuliert werden. Diese Präparate haben den Charakter von gegebenenfalls kolloidalen Lösungen oder auch von wäßrigen Emulsionen, insbesondere O/W-Emulsionen, z.B. Makroemulsionen oder auch solche die sehr feinteilig sein können und insbesondere das Aussehen einer Mikroemulsion oder auch Nanoemulsion aufweisen können. Durch die Verwendung von Emulgatoren (E) und gegebenenfalls Formulierungszusätzen (F₁) und/oder (F₃) kann die Feinteiligkeit und die Viskosität der Emulsion zusätzlich beeinflußt werden, besonders bis in den Bereich der Nanoemulsionen und kolloidalen Lösungen. Als Mikroemulsionen gelten insbesondere solche mit einer Teilchengröße der emulgierten Teilchen ≤ 0,2 um, als Nanoemulsionen solche mit einer Teilchengröße der emulgierten Teilchen ≤ 0, µm.

Die wäßrigen Präparate (W_{SH}) können auf sehr einfache Weise, durch einfaches Vermischen von (S_{H}) mit Wasser und gegebenenfalls weiteren Komponenten (E) und/oder (F) hergestellt werden, wobei das Vermischen der Komponenten bei beliebigen geeigneten Temperaturen erfolgen kann, z.B. im Bereich von 15°C bis zur Rückflußtemperatur, vorteilhaft im Bereich von 18 bis 80°C; Temperaturen < 50°C sind dafür besonders geeignet. Am einfachsten wird bei Raumtemperatur verfahren.

Die Konzentration von (S_{H}) in (W_{SH}) kann beliebig sein, wie es auch der Löslichkeit oder Hydrophilie von (S_{H}), und gegebenenfalls der Anwesenheit von (E) und/oder (F₁) und/oder (F₃), entspricht und/oder wie für einen bestimmten Verwendungszweck gewünscht. Mit den modifizierten Polysiloxanen (S_{H}) können verdünnte bis hoch konzentrierte Präparate (W_{SH}) hergestellt werden, z.B. mit einer (S_{H})-Konzentration im Bereich von 10 bis 98 Gew.-%, vorteilhaft 15 bis 95 Gew.-% [als verdünnte gelten hier insbesondere solche mit einer (S_{H})-Konzentration < 50 Gew.-%, vornehmlich im Bereich von 10 bis 40 Gew.-%, als hoch konzentrierte solche mit einer (S_{H})-Konzentration ≥ 50 Gew.-%, vornehmlich im Bereich von 60 bis 98 Gew.-%]. Der pH der wäßngen Präparate (W_{SH}) kann in einem weiten Bereich schwanken, z.B. im pH-Bereich von 4 bis 10, vorteilhaft 4 bis 9, wobei der pH der hoch konzentrierten vorteilhaft im schwach sauren bis basischen Bereich liegt, vorzugsweise im pH-Bereich von 6 bis 10, während der pH der verdünnteren, insbesondere solcher mit einer (S_{H})-Konzentration ≤ 40 Gew.-%, vorteilhaft im sauren bis neutralen Bereich liegt, vorzugsweise im pH-Bereich von 4 bis 7.

Es können Präparate (W_{SH}) in einem sehr breiten Bereich an Teilchengröße, Konzentration und Viskosität hergestellt werden, besonders wäßrige, fließfähige, Makro-, Mikro- oder Nanoemulsionen, besonders auch durchsichtige bis wasserklare Nanoemulsionen - auch hoch konzentrierte, mit einem (S_{H})-Gehalt ≥ 50 Gew.-% z.B. 60-98 Gew.-%.

Die erfindungsgemäß modifizierten Polysiloxane (S_{H}), insbesondere in Form der definierten wäßrigen Präparate (W_{SH}), können so wie sie hergestell worden sind, transportiert, gelagert und gehandhabt werden. Sie eignen sich als Ausrüstungsmittel, insbesondere als Weichmacher mit hydrophilen Eigenschaften, für Fasermaterial, insbesondere für Textilmaterial, und können, so wie sie formuliert sind, direkt zur Formulierung der Applikationsflotten eingesetzt werden oder können erforderlichenfalls, vor der Applikation aus wäßrigem Medium, mit Wasser zu verdünnteren Stammemulsionen oder -lösungen verdünnt werden, z.B. bis zu einem Trockenstoffgehalt von 2 bis 10 Gew.-%.

Als Substrate für die erfindungsgemäße Ausrüstung mit (S_{H}) bzw. (W_{SH}) eignet sich beliebiges Fasermaterial, besonders Textilmaterial, wie es in der Textilindustrie vorkommt, und zwar sowohl natürliche als auch synthetische und halbsynthetische Materialien und deren Gemische, insbesondere natürliche, modifizierte oder regenerierte Cellulose [vornehmlich Baumwolle ("CO") oder Viskose], natürliches oder synthetisches Polyamid [vornehmlich Wolle ("WO") oder vollsynthetische Polyamide ("PA")], Polyester ("PES"), Polyurethan ("PU") oder Polyacrylnitnl ("PAN") enthaltendes Material, sowie Gemische daraus (z.B. PES/CO, PES/WO, PA/PU und PAN/CO) z.B. auch Elastane. Das Material kann in einer beliebigen Bearbeitungsform vorliegen, z.B. als lose Fasern, Filamente, Fäden, Gamstränge und -spulen, Gewebe, Gewirke (besonders Trikot), Vliese, Vliesstoffe, Filze, Teppiche, Samt, Frottier- oder Tuftingware oder auch Halbfertig- oder Fertigware. Vorzugsweise werden Kreuzspulen, Textilbahnen, Textilschlauchware (insbesondere Gewirkschlauchware) oder Stückware ausgerüstet.

Die Ausrüstung erfolgt zweckmäßig aus wäßrigem, deutlich saurem bis nahezu neutralem Medium, insbesondere im pH-Bereich von 4,0-8,5. Die Konzentration der erfindungsgemäßen Präparate, bezogen auf das Substrat, kann je nach Art und Beschaffenheit des Substrates und gewünschtem Effekt in weiten Grenzen variieren und beträgt - berechnet auf die Komponente (S_{H}) - vorteilhaft Werte im Bereich von 0,02 bis 3, vorzugsweise 0,05 bis 1 Gew.-% Polysiloxan (S_{H}) bezogen auf das Trockengewicht des Substrates.

Das erfindungsgemäße Ausrüstungsverfahren wird vorteilhaft als letzte Ausrüstungsstufe des Materials durchgeführt, vorzugsweise im Anschluß an eine Bleiche, ein optisches Aufhellverfahren und/oder ein Färbeverfahren, gegebenenfalls zusammen mit einer zusätzlichen Behandlung, z.B. einer permanenten Ausrüstung (Kunstharzausrüstung) des Fasermaterials. Die Ausrüstung kann nach beliebigen an sich üblichen Verfahren durchgeführt werden, z.B. nach Imprägnierverfahren oder nach Ausziehverfahren. Bei Ausziehverfahren können sowohl Verfahren aus langer als auch aus kurzer Flotte in Frage kommen, z.B. bei Flottenverhältnissen Flotte:Ware im Bereich von 100:1 bis 0,5:1, insbesondere zwischen 60:1 und 2:1; die Applikationstemperatur kann auch bei üblichen Werten liegen, beispielsweise im Bereich zwischen Raumtemperatur und 60°C, vorzugsweise im Bereich von 25°C bis 50°C, der pH-Wert liegt vorzugsweise im Bereich von 5 bis 8,5. Das Imprägnieren kann ebenfalls nach an sich üblichen Verfahren durchgeführt werden, z.B. durch Tauchen, Foulardieren, Schaumauftrag oder Aufsprühen, vorzugsweise bei Temperaturen von 15-40°C und bei pH-Werten im Bereich von 4 bis 8. Nach dem Imprägnierverfahren bzw. nach dem Ausziehverfahren kann die behandelte Ware auf übliche Weise getrocknet werden, z.B. bei 30 bis 190°C, vorzugsweise 60 bis 170°C.

Die wäßrigen Präparate (W_{SH}), insbesondere so hergestellt wie oben beschrieben, zeichnen sich durch ihre Beständigkeit, besonders Lager- und Transportbeständigkeit, aus und können rasch mit Wasser beliebig verdünnt werden. Die erfindungsgemäßen wäßrigen Präparate (W_{SH}) sowohl in gelöster Form als auch in emulgierter Form, in konzentrierter oder auch verdünnter Form, und die daraus hergestellten Flotten zeichnen sich besonders durch ihre hervorragende Scherkraftbeständigkeit aus und die Applikationsflotten sind insbesondere auch unter starker dynamischer Beanspruchung von Flotte und/oder Textilmaterial stabil und unverändert wirksamen. Sie eignen sich folglich besonders gut für den Einsatz in schnell-laufenden Apparaten, z.B. für die Ausrüstung in der Haspelkufe, im Jigger, in Garnfärbeapparaten, in Stück-Färbeapparaten (sogenannten "Garment Dyeing Machines"), vor allem aber in Düsenfärbeapparaten, und zwar auch in solchen, in denen extrem hohe Scherkräfte wirksam werden (sowohl in der Flottenzirkulation im Färbeapparat als auch in den Flottenzirkulationspumpen). Sie sind auch für die Ausrüstung von Stoffen auf dem Baumapparat und von Kreuzspulen sehr gut geeignet; auch in diesem Fall hat die starke dynamische Beanspruchung der Flotte, die vom Inneren des Baumes oder der Spule nach außen oder umgekehrt durch den auf den Baum gewickelten Stoff bzw. durch die Fäden der Kreuzspule forciert wird, praktisch keine negative Auswirkung auf die erfindungsgemäßen Präparate und die damit erzielte Ausrüstung. Desweiteren sind sie auch besonders für solche Imprägnierverfahren geeignet, in welchen hohe Scherkräfte wirksam werden, z.B. für das Aufsprühen gegebenenfalls in Form von Schaum (worin die Flotte durch Sprühdüsen forciert wird, um sie auf die Ware zu sprühen) oder für Vakuum-Imprägnierverfahren (worin die mit der Behandlungsflotte besprühte Ware über mindestens ein Vakuumsieb geleitet wird, so daß die überschüssige Flotte kräftig und rasch abgesaugt und mit einer Zirkulationspumpe zur Imprägnierung zurückgeführt wird).

Die erfindungsgemäßen Präparate sind in den Behandlungsflotten auch gegen allfällige Verunreinigungen, die z.B. als Rückstände aus einer vorhergehenden Behandlung des Substrates stammen können, insbesondere mit allfälligen Farbstoff-, Aufheller- und/oder Hilfsmittelrückständen in den wäßrigen Flotten, beständig, insbesondere gegen anionische, kationische oder nicht-ionische Verunreinigungen, z.B. Farbstoffe, optische Aufheller und weitere Behandlungsmittel (z.B. Fixiermittel, Nachwaschmittel, Färbereihilfsmittel oder Tenside), und können zur Ausrüstung von beliebig gefärbter und/oder optisch aufgehellter Ware eingesetzt werden, ohne daß eine unerwünschte Ausfällung oder sonstige irreversible Destabilisierung gefürchtet werden muß.

Nach einer besonderen Ausführungsform der Erfindung können die erfindungsgemäßen Polysiloxane (S_{H}), gegebenenfalls in Form von wäßrigem Präparat (W_{SH}), zur weichmachenden Ausrüstung von waschbaren Stoffen verwendet werden, insbesondere unter solchen Bedingungen die zu einer nicht-permanenten Ausrüstung führen, typischerweise unter deutlich alkalischen Bedingungen (z.B. bei pH-Werten im Bereich von 8,5-12), wie sie besonders in der Haushaltwäsche im Hauptwaschgang oder/und in einer nachfolgenden Weichspülung vorkommen können. Und so ist ein weiterer Gegenstand der Erfindung die Verwendung der Polysiloxane (S_{H}), gegebenenfalls in Form von wäßrigem Präparat (W_{SH}), zur weichmachenden Behandlung von waschbaren Stoffen, besonders in der Haushaltwäsche im Hauptwaschgang oder/und in einer nachfolgenden Weichspülung. Zu diesem Zweck können die Polysiloxane (S_{H}), gegebenenfalls in Form von wäßrigem Präparat (W_{SH}), mit entsprechenden Waschmitteln kombiniert werden und/oder alleine oder auch in Kombination mit sonst üblichen Formulierungskomponenten, zu ensprechenden Weichspülpräparaten formuliert werden. Ein weiterer Gegenstand der Erfindung is folglich auch durch die Waschmittel oder Weichspülmittel für die Haushaltwäsche dargestellt, die durch einen Gehalt an (S_{H}), gegebenenfalls in Form von wäßrigem Präparat (W_{SH}), gekennzeichnet sind. Der Gehalt an (S_{H}) in diesen Präparaten kann in den gleichen Bereichen liegen, wie dafür bekannte Weichmacher, z.B. im Bereich von 0,1 bis 20 Gew.-%.

In den folgenden Beispielen bedeuten die Teile Gewichtsteile und die Prozente Gewichtsprozente; die Temperaturen sind in Celsiusgraden angegeben. Die Tridecanolpolyglykoläther sind Anlagerungsprodukte von Äthylenoxyd an Tridecanol aus der Oxosynthese. Die in den Applikationsbeispielen eingesetzten Farbstoffe optischen Aufheller und Hilfsmittel, sind, mit Ausnahme der erfindungsgemäßen Produkte, handelsübliche Produkte; die Farbstoff- und Aufhellerkonzentrationen beziehen sich auf die handelsübliche Form; "C.I." Steht für "Colour Index".

### Herstellung von Alkylpolyglykolglycidyläthern (H)

### BEISPIEL 1

H(a). 432,60 Teile Tridecanol-poly-9,5-glykoläther werden bei 80°C mit 4,60 Teilen Zinntetrachlorid, wasserfrei, versetzt. Sodann werden 64,8 Teile Epichlorhydrin innerhalb von ca. 60 Minuten bei 80°C zugetropft und während 60 Minuten bei 80°C weiter reagieren gelassen. Sodann wird bis auf ca. 40 mbar Restdruck evakuiert und auf 30°C unter Vakuum abgekühlt. Nun wird mit Stickstoff entlastet und es werden 43,58 Teile Kaliumhydroxyd, Pulver (Gehalt mindestens 85 %) zugegeben, wobei die Temperatur von ca. 30 auf 45°C ansteigt. Nun wird auf 50°C aufgeheizt und gleichzeitig auf 40 mbar Restdruck wieder evakuiert, um das Reaktionswasser zu entfernen. Nach 60 Minuten bei 50°C und 40 mbar wird mit Stickstoff entlastet und die gesamte Reaktionsmasse wird unter Vakuum filtriert. Das Filtrat (ca. 435,00 Teile) weist ein Epoxyd-Äquivalentgewicht von ca. 780 auf und ist salzfrei. Das Epoxyd-Äquivalentgewicht ist das Gewicht das notwendig ist, um eine Epoxydgruppe (bzw. Glycidylgruppe) titrieren zu können.

### BEISPIEL 2

H(b). 546,50 Teile Tridecanol-poly-12,0-glykoläther werden bei 80°C mit 2,50 Teilen Bortrifluorid-äthylätherat und 5,00 Teilen Zinntetrachlorid, wasserfrei, versetzt. Sodann werden 69,50 Teile Epichlorhydrin innerhalb von ca. 45 Minuten bei 80°C zugetropft und während 60 Minuten bei 80°C weiter reagieren gelassen. Sodann wird bis auf ca. 40 mbar Restdruck evakuiert und auf 30°C unter Vakuum abgekühlt. Nun wird mit Stickstoff entlastet und es werden 45,70 Teile Kaliumhydroxyd, Pulver (Gehalt mindestens 85 %) zugegeben, wobei die Temperatur auf ca. 45°C ansteigt. Nun wird auf 50°C aufgeheizt, 60 Minuten bei 50°C reagieren gelassen und die Temperatur noch während 60 Minuten unter 30 mbar Restdruck gehalten. Anschließend wird bei 50°C unter Vakuum filtriert. Das Filtrat (ca. 520,00 Teile) weist ein Epoxyd-Äquivalentgewicht von ca. 950 auf und ist salzfrei.

### Herstellung von aminomodifizierten Siloxanen (S)

### BEISPIEL 3

S(a). 951,76 Teile Octamethylcyclotetrasiloxan sowie 38,31 Teile [N-(2-Aminoäthyl)-3-aminopropyl]-methyl-dimethoxysilan werden mit 0,95 Teilen Tetrabutylammoniumhydroxyd (40 %-ige methanolische Lösung) versetzt und unter leichtem Stickstoffstrom innert 90 Minuten auf 70°C aufgeheizt. Nach 2 Stunden bei 70°C wird bis auf einen Restdruck von 50 mbar evakuiert und anschließend bei konstantem Restdruck auf 110°C aufgeheizt. Nach einer Stunde bei 110°C und 50 mbar, unter Vakuum wird auf Raumtemperatur abgekühlt. Es haben total ca. 25,0 Teile unreagiertes Octamethylcyclotetrasiloxan destilliert und es werden ca. 965,00 Teile aminomodifiziertes Polydimethylsiloxan S(a) mit einer Aminzahl von ca. 0,385 erhalten.

### BEISPIEL 4

S(b). Es wird vorgegangen wie für die Herstellung von S(a) aber es werden 1600,00 Teile Octamethylcyclotetrasiloxan mit 93,00 Teilen [N-(2-Aminoäthyl)-3-aminopropyl]-methyl-dimethoxysilan und mit 4,80 Teilen Tetrabutylammoniumhydroxyd (40 %-ige methanolische Lösung) umgesetzt. Es werden ca. 1646,6 Teile aminomodifiziertes Polydimethylsiloxan S(b) mit einer Aminzahl von ca. 0,55 erhalten.

### Herstellung der substituierten, aminomodifizierten Siloxane (S_{H})

### BEISPIEL 5

S_{H}(aa)(1). 193,00 Teile S(a) werden unter Rühren und Stickstoff mit 87,00 Teilen Alkylpolyglykolglycidyläther H(a) gemischt und auf 150°C aufgeheizt. Nach 8 Stunden bei 150°C sind keine Epoxygruppen mehr titrierbar. Das Reaktionsprodukt wird abgekühlt und ausgeladen. Man erhält 280,00 Teile Silikonöl S_{H}(aa)(1).

### BEISPIEL 6

S_{H}(aa)(2). Es wird vorgegangen wie bei S_{H}(aa)(1) aber es werden 58,00 Teile Alkylpolyglykolglycidyläther H(a) anstelle von 87,00 Teilen eingesetzt. Man erhält 251,00 Teile Silikonöl S_{H}(aa)(2).

### BEISPIEL 7

S_{H}(ba)(1). Es wird vorgegangen wie bei S_{H}(aa)(1) aber es werden 548,00 Teile S(b) und 235,00 Teile Alkylpolyglykolglycidyläther H(a) eingesetzt. Man erhält 783,00 Teile Silikonöl S_{H}(ba)(1).

### BEISPIEL 8

S_{H}(ba)(2). Es wird vorgegangen wie bei S_{H}(aa)(1) aber es werden 548,00 Teile S(b) und 353,00 Teile Alkylpolyglykolglycidyläther H(a) eingesetzt. Man erhält 901,00 Teile Silikonöl S_{H}(ba)(2).

### BEISPIEL 9

S_{H}(bb)(1). Es wird vorgegangen wie bei S_{H}(aa)(1) aber es werden 548,00 Teile S(b) mit 430,00 Teilen Alkylpolyglykolglycidyläther H(b) umgesetzt. Es werden 978,00 Teile Silikonöl S_{H}(bb)(1) erhalten.

### BEISPIEL 10

S_{H}(bb)(2). Es wird vorgegangen wie bei S_{H}(aa)(1) aber es werden 548,00 Teile S(b) mit 286,00 Teilen Alkylpolyglykolglycidyläther H(b) umgesetzt. Man erhält 834,00 Teile Silikonöl S_{H}(bb)(2).

### Herstellung von wäßrigen Präparaten (W_{SH})

### BEISPIEL 11

W1. 280,00 Teile Silikonöl S_{H}(aa)(1) werden bei Raumtemperatur mit 28,00 Teilen Tridecanolpoly-9,5-glykoläther und 14 Teilen Wasser vermischt. Man erhält 322,00 Teile Produkt W1 in Form einer transparenten, viskosen, leicht mit Wasser weiterverdünnbaren Flüssigkeit die einen pH-Wert von ca. 9,0 aufweist.

### BEISPIEL 12

W2. 255,00 Teile Silikonöl S_{H}(aa)(2) werden mit 40,00 Teilen Tndecanolpoly-9,5-glykoläther bei Raumtemperatur vermischt. Sodann werden in 3 Portionen total 700,00 Teile Wasser eingerührt und anschließend noch 5,00 Teile Eisessig zugegeben. Es werden 1000,00 Teile Silikon-Mikroemulsion W2 erhalten.

### BEISPIEL 13

W3. 160,00 Teile Silikonöl S_{H}(ba)(1) werden mit 16 Teilen Tridecanolpoly-6,5-glykoläther verrührt. Anschließend werden 3,20 Teile Essigsäureanhydrid zugegeben. Nach 15 Minuten Reaktionszeit werden noch 361,00 Teile Wasser unter Rühren zugegeben. Es werden 540,20 Teile Silikon-Mikroemulsion W3 erhalten.

### BEISPIEL 14

W4. 295,00 Teile Silikonöl S_{H}(ba)(2) werden mit 666,00 Teilen Wasser, 9,00 Teilen Eisessig und 30,00 Teilen Tridecanolpoly-12-glykoläther verrührt. Es werden 1000,00 Teile Silikon-Mikroemulsion W4 erhalten.

### BEISPIEL 15

W5. 307,00 Teile Silikonöl S_{H}(bb)(2) werden mit 686,00 Teilen Wasser und 7,00 Teilen Eisessig verrührt. Es werden 1000,00 Teile Silikon-Mikroemulsion W5 erhalten.

### BEISPIEL 16

W6. 307,00 Teile Silikonöl S_{H}(bb)(2) werden mit 6,00 Teilen Essigsäureanhydrid bei Raumtemperatur umgesetzt und anschließend mit 687,00 Teilen Wasser verrührt. Es werden 1000,00 Teile Silikon-Mikroemulsion W6 erhalten.

### BEISPIEL 17

W7. 110,00 Teile Silikonöl S_{H}(bb)(1) werden mit 3,50 Teilen Eisessig und 15,00 Teilen Tridecanolpoly-9,5-glykoläther und 199,50 Teilen Wasser verrührt. Es werden 328,00 Teile Silikon-Mikroemulsion W7 erhalten.

### Applikationsbeispiele

### APPLIKATIONSBEISPIEL A

1 kg des auszurüstenden Substrates (Textilware, Baumwoll-Single-Jersey, vorgefärbt mit 2,40 % C.I. Reactive Blue 193, 1,50 % C.I. Reactive Red 147 und 0,30 % C.I. Reactive Yellow 125) werden bei 40°C und einem Flottenverhältnis 1:8 auf einem Laborjet der Firma Mathis (Schweiz) mit 30 g/l Ausrüstungsmittel (Produkte W2 bis W7) behandelt. Die Flottenumwälzung beträgt ca. 15,0 l/Minute und die Behandlungszeit 20 Minuten. Das Wasser weist eine Härte von 10°dH (nach DIN 57905) und einen pH von ca. 6 auf. Nach der Behandlung wird das Substrat geschleudert und an der Luft getrocknet. Es treten während der Behandlung keine Ablagerungen oder schmierige Abscheidungen auf. Auf der Textilware sind keine Flecke festzustellen. Nach dem Ablassen der Flotte können keine Rückstände im Apparat beobachtet werden. Sämtliche Produkte (W2 bis W7) sind scherstabil und ergeben eine deutliche Verbesserung des Griffes der behandelten Textilware (gegenüber der entsprechend ohne Silikonmikroemulsion behandelten).

### APPLIKATIONSBEISPIEL B

- Apparat:: THIES-Jet R95, 3 Kammern;
- Substrat:: 220 kg Polyester/Baumwolle (50:50) Trikot, hellblau (0,20 % C.I. Reactive Blue 19 und 0,13 % C.I. Reactive Blue 21 sowie 0,015 % C.I. Disperse Blue 56 und 1,020 % C.I. Disperse Blue 87);
- Flotte:: 2200 1 (Flottenverhältnis 1:10);
- Warengeschwindigkeit:: 150 m/min;
- Temperatur:: 40°C;
- Produkt:: 3 % W4;
- Zeit:: 20 Minuten;
- pH:: 5,5 mit Essigsäure eingestellt.
- Arbeitersablauf:: Das Produkt wird in 100 1 Wasser vorverdünnt und in 5 Minuten zudosiert. Es bilden sich keine Rückstände, Ablagerungen oder Flecke. Das Warenbild sowie der Weichgriff der trockenen Ware sind einwandfrei.

Analog zu W4 können auch W2, W3, W5, W6 und W7 eingesetzt werden. Außer dem ausgezeichneten Warenbild und Weichgriff, sind die mit W4 und W7 behandelten Textilien sehr hydrophil.

### APPLIKATIONSBEISPIEL C

Ausgehend von W1 wird eine Mikroemulsion W1' folgendermaßen hergestellt:

694,0 Teile Wasser, entmineralisiert, werden vorgelegt. Sodann werden unter Rühren 300,0 Teile W1 zugegeben. Nach 10 Minuten werden noch 6,00 Teile Eisessig zugegeben. Es wird eine pumpbare wäßrige Mikroemulsion erhalten (Produkt W1').

Ein Baumwoll-Cretonne, mit 0,4 % C.I. Fluorescent Brightener 380 (in Flüssigform) voraufgehellt, wird bei Raumtemperatur bis zu einer 75 %-igen Trockengewichtzunahme mit einer wäßrigen Flotte foulardiert, die 30 g/l W1' enthält. Anschließend wird das foulardierte Material 60 Sekunden bei 140°C getrocknet. Die ausgerüstete Ware weist einen hervorragenden Weichgriff auf, ist hydrophil und zeigt im Vergleich zu einem Blindversuch keine Beeinträchtigung des Weißgrades auf.

### APPLIKATIONSBEISPIEL D

Polyester-Trikot, Tersuisse, gefärbt mit 3 % eines schwarzen Dispersionfarbstoffgemisches aus C.I. Disperse Blue 291:1, C.I. Disperse Violet 93:1, C.I. Disperse Red 54, C.I. Disperse Orange 25 und C.I. Disperse Orange 30, wird bei Raumtemperatur bis zu einer 95 %-igen Trockengewichtzunahme mit einer wäßrigen Flotte foulardiert, die 30 g/l W2 enthält. Anschließend wird das foulardierte Material 120 Sekunden bei 140°C getrocknet. Die ausgerüstete Ware weist einen hervorragenden Weichgriff auf. Während der Applikation neigt der Dispersionsfarbstoff nicht zur Thermomigration.

## Patentansprüche

1. Substituierte Aminopolyorganosiloxane (S_{H}) enthaltend substituierte Aminogruppen, die über Alkylenbrücken oder Mono- oder Oligo-(alkylenamino)-alkylenbrücken an Siliciumatome des Polysiloxangrundgerüstes gebunden sind, worin die in den Aminopolyorganosiloxanen vorkommenden Aminogruppen mindestens teilweise mit einem Rest der Formel
T―CH₂―CHOH―CH₂- (ε),
worin T den Rest eines tensiden Monoalkoholpolyglykoläthers mit Emulgatorcharakter bedeutet,
im durchschnittlichen Verhältnis von mindestens 1,5 Resten der Formel (ε) pro Si-gebundene Aminoalkylgruppe oder Amino-mono- oder -oligo-(alkylenamino)-alkyl-Gruppe substituiert sind, und vorhandene Aminogruppen gegebenenfalls mindestens teilweise zu Amidgruppen acyliert sind oder alkyliert und/oder benzyliert und/oder protoniert sind.

2. Substituierte Aminopolyorganosiloxane (S_{H}) gemäß Anspruch 1, welche einen Stickstoffgehalt im Bereich von 0,03 bis 4,2 Gew.-% aufweisen.

3. Substituierte Aminopolyorganosiloxane (S_{H}) gemäß Anspruch 1 oder 2, mit einem (ε)-Substitutionsgrad der gesamten Aminogruppen im Bereich von 40 bis 100 %.

4. Verfahren zur Herstellung von substituierten Aminopolyorganosiloxanen (S_{H}) gemäß Anspruch 1, **dadurch gekennzeichnet, daß** man Aminopolyorganosiloxane (S) welche primäre und/oder sekundäre Aminogruppen, die über Alkylenbrücken oder Mono- oder Oligo--(alkylenamino)-alkylenbrücken an Siliciumatome des Polysiloxangrundgerüstes gebunden sind, enthalten, mit mindestens einem Alkoholpolyglykoläther-monoglycidyläther (H) umsetzt und gegebenenfalls acyliert und/oder alkyliert und/oder benzyliert und/oder protoniert.

5. Verfahren nach Anspruch 4, **dadurch gekennzeichnet, daß** (S) eine Aminzahl im Bereich von 0,05 bis 3 und ein durchschnittliches Molekulargewicht im Bereich von 1500 bis 300'000 aufweist.

6. Wäßriges Präparat (W_{SH}) von (S_{H}), welches wie Anspruch 1 definiert ist, gegebenenfalls zusätzlich enthaltend mindestens einen nicht-ionogenen Emulgator (E) und/oder mindestens einen Formulierungszusatz (F).

7. Wäßriges Präparat (W_{SH}) gemäß Anspruch 6, worin (E) ein O/W-Emulgator ist und (F)
(F₁) ein Mittel zur Beeinflussung der flüssigen Form des wäßrigem Präparates,
(F₂) ein Mittel zum Schutz gegen die schädigende Wirkung von Mikroorganismen
und/oder
(F₃) eine Säure und/oder eine Base zur pH-Einstellung ist.

8. Verwendung von (S_{H}), welches wie im Anspruch 1 definiert ist, vorteilhaft in Form von wäßrigem Präparat (W_{SH}) definiert wie in einem der Ansprüche 6-7, zur Ausrüstung von Fasermaterial.

9. Verwendung nach Anspruch 8 zur weichmachenden Behandlung von waschbaren Stoffen.

10. Verwendung nach Anspruch 8 oder 9 nach Imprägnier- oder Ausziehverfahren aus wäßrigem Medium.

11. Verwendung nach Anspruch 10 zur Ausrüstung von Textilmaterial in Düsenfärbeapparaten.

12. Verwendung nach einem der Ansprüche 8 bis 10 nach Imprägnierverfahren, in Kombination mit einer Kunstharzausrüstung.

13. Verwendung nach Anspruch 8 oder 9 zur weichmachenden Behandlung in der Haushaltwäsche im Hauptwaschgang oder/und in einem nachfolgenden Weichspülgang.

14. Waschmittel oder Weichspülpräparat für die Haushaltwäsche, enthaltend (S_{H}) gemäß Anspruch 1, gegebenenfalls in Form von wäßrigem Präparat (W_{SH}) gemäß Anspruch 6 oder 7.
